**Europäisches Patentamt**

(19) **European Patent Office**

**Office européen des brevets**

(11) Publication number: **0 135 114**
**B1**

(12)  # EUROPEAN PATENT SPECIFICATION

(45) Date of publication of patent specification: **29.03.89**

(51) Int. Cl.⁴: **E 05 D 15/28,** E 05 D 3/06, B 60 J 5/04

(21) Application number: **84109447.7**

(22) Date of filing: **08.08.84**

(54) **Side door hinge mechanism in a motor vehicle.**

(30) Priority: **09.08.83 JP 123460/83 u**

(43) Date of publication of application:
**27.03.85 Bulletin 85/13**

(45) Publication of the grant of the patent:
**29.03.89 Bulletin 89/13**

(84) Designated Contracting States:
**DE FR GB**

(56) References cited:
**US-A-3 095 600**

(73) Proprietor: **TOYOTA JIDOSHA KABUSHIKI KAISHA**
**1, Toyota-cho Toyota-shi**
**Aichi-ken 471 (JP)**

(72) Inventor: **Nomura, Kazuhiro TOYOTA JIDOSHA K.K.**
**1, Toyota-cho Toyota-shi**
**Aichi-ken (JP)**
Inventor: **Nomura, Masayuki TOYOTA JIDOSHA K.K.**
**1, Toyota-cho Toyota-shi**
**Aichi-ken (JP)**

(74) Representative: **Grupe, Peter, Dipl.-Ing. et al**
**Patentanwaltsbüro Tiedtke-Bühling-Kinne-Grupe-Pellmann-Grams-Struif Bavariaring 4**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 135 114 B1

## Description

This invention relates to a side door hinge mechanism in a motor vehicle according to the pre-characterizing portion of claim 1.

In most cases, the side door in a motor vehicle, e.g. passenger car has heretofore been installed in a manner to be rotatable about a hinge affixed to a vehicle body for opening or closing. In order to allow an occupant of the motor vehicle to open the side door for getting on or off the motor vehicle, a door opening angle corresponding to the total length of the side door is required. When a space beside the motor vehicle is small, it is difficult for the occupant to get on or off the vehicle because the side door cannot be opened sufficiently.

US—A—3,095,600 discloses a side door hinge mechanism wherein a quadruple articulated hinge comprises a front rotary link interconnecting a first and a second rotary shaft disposed at the forward sides of a vehicle body and a side door and a rear rotary link interconnecting a third and a fourth rotary shaft disposed at the vehicle body, and at the side door spaced from the first and second rotary shaft in the rear longitudinal direction of the vehicle.

In the above-described side door hinge mechanism the fourth rotary shaft at the rear rotary link is secured to an intermediate position in the longitudinal direction of an inner pannel of the side door.

In consequence, the rear rotary link is protruded into a compartment, whereby it may interfere with a body or an arm of a driver or an occupant; there is a possibility that a finger may be pinched between the rear rotary link and the inner panel of the side door, and further, the appearance of the interior of the compartment is deteriorated.

It is the object of the present invention to provide a side door hinge mechanism in a motor vehicle, wherein a rear rotary link is prevented from interfering with an arm or body of an occupant, pinching a finger or the like of the occupant between the rear rotary link and the inner panel of the side door, and further, deteriorating the appearance of the invention of the compartment.

This object is in accordance with the invention achieved by the features of the characterizing portion of claim 1. The rear rotary link is concealed by being closely attached to the undersurface of the arm rest when the door is closed, so that the interference of the rear rotary link with an arm, body or the like of an occupant is avoided, the pinching of a finger between the rear rotary link and the inner panel of the side door is prevented, and the appearance of the interior of the compartment when the door is closed equals to that of a motor vehicle having a conventional hinge mechanism.

According to claim 3 an appearance is obtainable, wherein the rear rotary link seems to form a part of the arm rest when the door is closed.

Further advantageous modifications of the invention derive from the other subclaims.

Fig. 1 is a schematic sectional plan view showing a side door hinge mechanism in a motor vehicle according to the present invention; and

Fig. 2 is a perspective view, partially sectional, showing the essential portions of the above side door hinge mechanism.

Description will hereunder be given of one embodiment of the present invention with reference to the drawings.

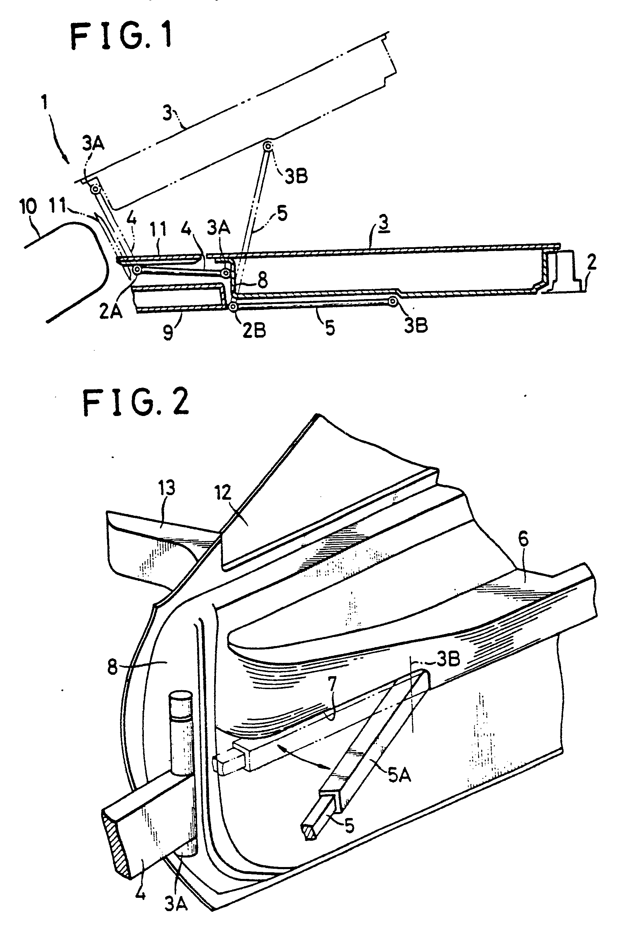

As shown in Figs. 1 and 2, in a side door hinge mechanism a quadruple articulated hinge comprises: a front rotary link 4 interconnecting a first rotary shaft 2A and a second rotary shaft 3A disposed at the forward sides of a vehicle body 2 and a side door 3 in a motor vehicle 1, a rear rotary link 5 interconnecting a third and a fourth rotary shaft 2B, 3B disposed at the vehicle body 2, and at the side door 3 spaced apart from the first and second rotary shaft 2A, 3A in the rear longitudinal direction of the vehicle. The rear rotary link 5 is disposed at a position having such a height that it is received in a manner to be substantially closely attached to the bottom portion of an arm rest 6 provided in the side door 3, when the side door 3 is closed.

The aforesaid arm rest 6 is formed at the bottom portion thereof with a recess 7 having a height and a depth in the direction of the thickness of the side door 3 equaling to a height and a width of the rear rotary link 4, respectively, whereby the rear rotary link 4 is received in the recess 7.

In the drawing, designated at 5A is an arm cover for covering the rear rotary link 5, made of a material identical with that of a surface skin of the arm rest 6.

More specifically, the rear rotary link 5 is received in the recess 7 of the arm rest 6 when the side door 3 is closed, and the outer side surface and the undersurface of the rear rotary link 5 are substantially flush with the outer side surface and the undersurface of the arm rest 6, whereby the outer side surface and the undersurface of the rear rotary link 5 seem to compose a part of the arm rest 6.

The fourth rotary shaft 3B of the rear rotary link 5 on the side door 3 is secured to the arm rest 6 and projects from above into the recess 7 at a rear end portion of the recess 7.

Furthermore, the second rotary shaft 3A of the front rotary link 4 is secured to an end panel 8 of the side door 3 on its front side, whereby the front rotary link 4 is not exposed to the compartment when the side door 3 is closed.

Further, both the first and third rotary shafts 2A and 2B are secured to a front pillar 9 at positions spaced apart in the longitudinal direction of the vehicle.

In the drawing, designated at 10 is a front wheel, 11 a movable fender portion for allowing the front rotary link 4 to rock outwardly when the side door 3 is opened, 12 a door glass and 13 a door mirror.

In this embodiment, the rear rotary link 5 is received in the recess 7 of the arm rest 6 when the side door 3 is closed to form a part of the arm rest 6, whereby the arrangement thereof is similar to that of an arm rest in a side door having the conventional hinge mechanism, so that the interference of the rear rotary link 5 with an arm or the like of the occupant can be avoided, the pinching of a finger between the rear rotary link 5 and the side door 3 can be prevented, and further, the appearance presents no unusual feeling so as not to deteriorate the appearance of the interior of the compartment.

Furthermore, the recess 7 is formed at the bottom portion of the arm rest 6, whereby the rear rotary link 5 is received in the recess 7, however, the present invention need not necessarily be limited to this, and such an arrangement may be adopted that the rear rotary link 5 is received by being closely attached to the undersurface of the arm rest 6 when the side door 3 is closed.

However, the arrangement, in which the rear rotary link 5 is received in the recess 7 as in the above embodiment, has a feeling of integrity between the rear rotary link 5 and the arm rest 6 from its appearance to thereby improve the appearance.

## Claims

1. A side door hinge mechanism in a motor vehicle, wherein a quadruple articulated hinge comprises: a front rotary link (4) interconnecting a first and a second rotary shaft (2A, 3A), which are disposed at the forward side of a vehicle body (2) and a side door (3), a rear rotary link (5) interconnecting a third and a fourth rotary shaft (2B, 3B) which are disposed spaced apart from that first and second rotary shafts (2A, 3A) in the rear longitudinal direction of the vehicle at said vehicle body (2) and said side door (3), characterized in that said rear rotary link (5) is disposed at a position having such a height that said rear rotary link (5) is received in a manner to be substantially closely attached to the bottom portion of an arm rest (6) when the side door (3) is closed.

2. A side door hinge mechanism according to claim 1, wherein a compartment side surface of said rear rotary link (5) is substantially flush with a compartment side surface of said arm rest (6) when said side door (3) is closed.

3. A side door hinge mechanism according to claim 1 or 2, wherein said arm rest (6) is formed at a bottom portion thereof with a recess (7) having a height and a depth in the direction of the thickness of said side door (3) equaling to a height and a width of said rear rotary link (5), respectively, whereby said rear rotary link (5) is received in said recess (7) when said side door (3) is closed.

4. A side door hinge mechanism according to claim 1, 2 or 3, wherein said fourth rotary shaft (3B) of said rear rotary link (5) is disposed at an undersurface of said arm rest (6) and said third rotary shaft (2B) of said rear rotary link (5) is disposed at a rear side surface of a front pillar (9).

5. A side door hinge mechanism according to one of claims 1 to 4, wherein said second rotary shaft (3A) of said front rotary link (4) is secured to a front end panel (8) of said side door (3) and said first rotary shaft (2A) of said front rotary link (4) is disposed at an outer side surface of said front pillar (9).

6. A side door hinge mechanism according to one of claims 1 to 5, wherein said first rotary shaft (2A) of said front rotary link (4) is disposed at a position on an inner side of a front fender surrounding a front wheel (10) a part of said front fender being divided from and movable with respect to said front fender thus forming a movable fender portion (11) for allowing said front rotary link (4) to turn about said first rotary shaft (2A) outwardly.

## Patentansprüche

1. Seitentürgelenkmechanismus für ein Kraftfahrzeug, bei dem ein vierfach aufgehängtes Gelenk aufweist: Ein vorderes drehbaren Bindeglied (4), welches eine erste und eine zweite Drehachse (2A, 3A) miteinander verbindet, die an der vorderen Seite eines Fahrzeugkörpers (2) und einer Seitentür (3) angeordnet sind, ein hinteres drehbares Bindeglied (5), das eine dritte und eine vierte Drehachse (2B, 3B) miteinander verbindet, die mit Abstand zur ersten und zweiten Drehachse (2A, 3A) in rückwärtiger Längsrichtung des Fahrzeugs am Fahrzeugkörper (2) und an der Seitentür (3) angeordnet sind, dadurch gekennzeichnet, daß das hintere drehbare Bindeglied (5) in einer derartigen Höhenlage angeordnet ist, daß das hintere drehbare Bindeglied (5) an der Unterseite einer Armstütze (6) an dieser anliegend aufgenommen ist, wenn die Seitentür (3) geschlossen ist.

2. Seitentürgelenkmechansimus nach Anspruch 1, bei dem eine Fahrgastraumseitige Fläche des hinteren drehbaren Bindeglieds (5) etwa mit der fahrgastraumseitigen Fläche der Armstütze (6) fluchtet, wenn die Seitentür (3) geschlossen ist.

3. Seitentürgelenkmechanismus nach Anspruch 1 oder 2, bei dem die Armstütze (6) an ihrem Unterabschnitt mit einer Ausnehmung (7) ausgebildet ist, die eine Höhe und eine Tiefe in Richtung der Seitentürdicke aufweist, die einer Höhe und einer Tiefe des hinteren drehbaren Bindeglieds (5) entsprechen, wodurch das hintere drehbare Bindeglied (5) in der Ausnehmung (7) aufgenommen wird, wenn die Seitentür (3) geschlossen ist.

4. Seitenturgelenkmechanismus nach Anspruch 1, 2 oder 3, bei dem die vierte Drehachse (3B) des hinteren drehbaren Bindeglieds (5) an einer Unterfläche der Armstütze (6) angeordnet ist und die dritte Drehachse (2B) des hinteren drehbaren Bindeglieds (5) an der rückseitigen Fläche eines vorderen Sintzpostens (9) angeordnet ist.

5. Seitentürgelenkmechanismus nach einem der Ansprüche 1 bis 4, bei dem die zweite Drehachse (3A) des vorderen drehbaren Bindeglieds (4) an ein vorderes Stirnblech (8) der Seitentür (3) befestigt ist und die erste Drehachse (2A) des ersten vorderen Bindeglieds (4) auf einer äußeren Seitenfläche des vorderen Stützpostens (9) angeordnet ist.

6. Seitentürgelenkmechanismus nach einem der Ansprüche 1 bis 5, bei dem die erste Drehachse (2A) des vorderen drehbaren Bindeglieds (4) in einer Lage an der Innenseite eines ein Vorderrad (10) umgebenden vorderen Schutzblechs angeordnet ist, wobei ein Teil dieses vorderen Schutzblechs vom vorderen Schutzblech getrennt und zu diesem bewegbar ist, wodurch ein bewegbares Schutzblechteil (11) gebildet wird, so daß das vordere drehbare Bindeglied (4) um die erste Drehachse (2A) nach außen gedreht werden kann.

**Revendications**

1. Un mécanisme de charnière pour portière latérale de véhicule automobile dans lequel un système de pivotement en quatre parties comprend: une biellette relative avant (4), reliant un premier et un second arbre rotatif (2A, 3A) qui sont disposés sur la face avant d'une caisse de véhicule (2) et une portière latérale (3), une biellette rotative arrière (5) reliant un troisième et un quatrième arbre rotatif (2B, 3B) qui sont montés à distance de ces premier et second arbres rotatifs (2A, 3A) sur ladite caisse de véhicule (2) et sur ladite portière latérale (3) dans la direction arrière du véhicule, caractérisé en ce que ledit biellette rotative rotatif arrière est positionnée pour avoir une hauteur qui soit telle que ladite biellette rotative arrière (5) soit reçue de façon à être sensiblement fixée à proximité de la partie basse d'un accoudoir (6) quand la portière latérale (3) est fermée.

2. Un mécanisme de charnière pour portière latérale selon la revendication 1 dans lequel une surface de ladite biellette rotative arrière (5), du côté de l'habitacle vient effleurer une surface dudit accoudoir (6) du côté de l'habitacle, quand la portière latérale (3) est fermée.

3. Un mécanisme de charnière pour portière latérale selon la revendication 1 ou 2, dans lequel ledit accoudoir (6) comporte, à sa partie basse, une cavité (7) ayant une hauteur et une profondeur, en direction de l'épaisseur de ladite portière latérale (3) qui sont égales à la hauteur et à la profondeur respectives de ladite biellette rotative arrière (5), de manière que ladite biellette rotative arrière (5) soit reçue dans ladite cavité (7) quand ladite portière latérale est fermée.

4. Un mécanisme de charnière pour portière latérale selon la revendication 1, 2 ou 3 dans lequel ledit quatrième arbre rotatif (3B) de ladite biellette rotative arrière (5) est disposée sur une surface inférieure dudit accoudoir (6) et ledit troisième arbre rotatif (2B) de ladite biellette rotative arrière (5) est disposé près de la surface latérale arrière d'un montant avant (9).

5. Un mécanisme de charniére pour portière latérale selon l'une des revendications 1 à 4, dans lequel ledit second arbre rotatif (3A) de ladite biellette rotative avant (4) est fixé à un panneau d'extrémité avant (8) de ladite portière latérale (3) et ledit premier arbre rotatif (2A) de ladite biellette rotative avant (4) est disposé sur une surface latérale extérieure dudit montant avant (9).

6. Un mécanisme de charnière pour portière latérale selon l'une des revenidcations 1 à 5, dans lequel ledit premier arbre rotatif (2A) de ladite biellette rotative avant (4) est placé sur une face intérieure d'une aile avant entourant une roue avant (10), une partie distincte de ladite aile avant étant séparée de et mobile par rapport à ladite aile avant pour former ainsi une partie d'aile mobile (11) permettant à ladite biellette rotative avant (4) de tourner vers l'extérieur autour dudit premier arbre rotatif (2A).

# FIG.1

# FIG.2